(19) Europäisches Patentamt
European Patent Office
Office européen des brevets

(11) **EP 2 581 719 B1**

(12) **EUROPEAN PATENT SPECIFICATION**

(45) Date of publication and mention
of the grant of the patent:
**03.04.2019  Bulletin 2019/14**

(51) Int Cl.:
***G01F 25/00*** *(2006.01)*     ***G01D 18/00*** *(2006.01)*

(21) Application number: **11185040.0**

(22) Date of filing: **13.10.2011**

(54) **Method of calibration time interval optimization**

Verfahren zur Kalibrierungszeitintervalloptimierung

Procédé pour l'optimisation de l'intervalle de temps d'étalonnage

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.04.2013  Bulletin 2013/16**

(73) Proprietor: **Endress+Hauser Consult AG**
**4153 Reinach (CH)**

(72) Inventor: **Vaissière, Dimitri**
**68130 Wittersdorf (FR)**

(74) Representative: **Andres, Angelika Maria**
**Endress+Hauser (Deutschland) AG+Co. KG**
**PatServe**
**Colmarer Strasse 6**
**79576 Weil am Rhein (DE)**

(56) References cited:
**WO-A1-2009/038803     DE-A1- 10 114 128**

- **"Chapter 10: Calibration" In: Kate Mc Cormick: "Quality, 1st Edition", 23 July 2002 (2002-07-23), Butterworth Heinemann, XP002671739, ISBN: 075065113X vol. 2, pages 142-150, * page 142 - page 144 * * page 146 * * page 148 - page 149 * * page 147, paragraph 10.3.4 ***
- **JOHN J BARRON ET AL: "Equipment qualification and its application to conductivity measuring systems", ACCREDITATION AND QUALITY ASSURANCE ; JOURNAL FOR QUALITY, COMPARABILITY AND RELIABILITY IN CHEMICAL MEASUREMENT, vol. 11, no. 11, 27 June 2006 (2006-06-27) , pages 554-561, XP019461934, SPRINGER, BERLIN, DE ISSN: 1432-0517, DOI: 10.1007/S00769-006-0178-9**

**Description**

The present invention concerns a method of optimizing calibration time intervals between consecutive calibrations of a measurement device for measuring a quantity to be measured operated on a measurement site of an industrial site.

Measurement devices are used in nearly all branches of industry for measuring quantities, in particular physical quantities related to ongoing production processes. Measurement results indicating the measured value of the quantity are for example commonly used in process automation for monitoring, controlling and/or regulating an industrial process, in particular a production process. Thus measurement devices play a vital part in industrial processes, and a defect of a device may have severe consequences.

Industrial production sites are quite often very complex sites including a large number of measurement devices on various measurement sites. In order to ensure and/or improve quality and safety of the industrial process it is advantageous, to perform a criticality analysis preferably for every measurement device on the site. Today criticality of a device is typically determined based on a product of a probability of a defect of the respective device and a severity of the consequences of this defect. Criticality analysis thus allows to identify the device forming the greatest risk in terms of probability and severity of the consequences to the overall performance of the process. Thus it is a valuable means in identifying candidates for reliability improvement and/or optimizing maintenance and calibration or verification of measurement devices as well as safety measures, such as provisions of redundant systems.

In order to ensure, that measurement devices fulfill certain measurement properties specified for them, in particular a specified measurement accuracy, and/or comply to certain standards, they are regularly re-calibrated.

Calibration is commonly used to check conformity of a device to a given specification. During calibration the measurement device performs at least one measurement task according to a given operating procedure, during which at least one given value of the quantity to be measured by the device is provided by a corresponding reference or standard. Based on the measurement results obtained by the device with respect to the given value of the quantity to be measured, a measurement error of the device is determined. In case the measurement error exceeds a predetermined maximum permissible error, the device is considered not to conform. As a consequence, e.g. adjustment or repair of the measurement device is required, which can then be performed based on the data obtained during the calibration procedure. This includes for example adjustments of offset, gain and/or span of the measurement indication. If the measurement errors do not exceed the maximum permissible error conformity of the device is declared and generally no additional actions are performed.

Re-calibrations are usually performed periodically after fixed calibration time intervals recommended by the manufacturer of the device, which are set solely based on technical properties of the device. Thus they are identical for all devices of the same type. For safety reasons, the calibration time intervals are typically set so short, that statistically most devices, e.g. above 90%, are still in full compliance at the end of their calibration time interval. Short calibration time intervals raise the costs involved in operating these devices. This is especially relevant in applications, where a whole section of a production site has to be shut down, in order to move the device from the measurement site to the calibration site.

On the other hand, even when short calibration intervals are foreseen, there is a higher risk involved in operating a device, which was only just considered to be compliant, than in operating a device, which was considered fully compliant. This is due to the higher measurement errors of these devices, which increase the probability for these devices to become non-compliant during the calibration time interval. Kate Mc Cormick in chapter 10 of "Quality" (Publisher Butterworth Heinemann, 23, July 2002) describes a method of adjusting the calibration periodicity based on the criticality level of the measurement device and its ability to maintain its calibration state.

It is an object of the invention to provide a method of optimizing calibration time intervals between consecutive calibrations of a measurement device for measuring a quantity to be measured operated on a measurement site of an industrial site, which allows to increase safety and reduce costs.

To this extend the invention comprises a method of optimizing calibration time intervals between consecutive calibrations of a measurement device for measuring a quantity to be measured operated on a measurement site of an industrial site, comprising the steps of:

- defining a given number of discrete measurement error levels for measurement errors of the device determined during its calibration,
- defining a given number of discrete criticality levels, for criticalities of the device determined based on a probability of a defect of the device and a severity of consequences of the defect,
- assigning a risk category classifying a risk involved in operating the device on the measurement site to each pair of one of the measurement error levels and one of the criticality levels,
- determining the measurement error of the device by performing a calibration of the device and determining the corresponding measurement error level of the device,

- determining the criticality of the device pertinent to the device on the measurement site of the industrial site and the corresponding criticality level of the device,
- determining the risk category of the device based on the measurement error level and the criticality level of the device, and
- in case the risk category of the device is lower or equal to a maximal allowable risk category performing a re-calibration of the device after a calibration time interval given by a product of a given reference interval and a predetermined risk factor assigned to the risk category of the device,

-- wherein the risk factors are positive numbers larger than zero and smaller than a predetermined maximal value larger than one, and
-- wherein risk factors assigned to lower risk categories are larger than risk factors assigned to higher risk categories.

It further comprises a first refinement of this method, wherein

- in case the risk category exceeds the maximal allowable risk category an adjustment and/or repair of the device is performed,
- after adjustment and/or repair of the device, a new measurement error level of the device is determined in an additional calibration, and
- in case the new measurement error level is low or intermediate,

-- the device is put back into operation on the measurement site and
-- re-calibrated after a shortened calibration time interval, given by a product of the reference interval and a criticality factor assigned to the criticality level of the device,
-- wherein the criticality factors are positive numbers lager than zero and smaller or equal to one, and
-- wherein criticality factors assigned to lower criticality levels are larger than criticality factors assigned to higher criticality levels, and

- in case the new measurement error level is high, the device is replaced.

It further comprises a refinement of the first refinement, wherein in case an intermediate new measurement error level was determined in the additional calibration,

- a corresponding warning is provided to an operator of the measurement site and/or the industrial site, and/or
- additional safety measures regarding the operation of the device on the measurement site are taken.

It further comprises a second refinement of this method, wherein the measurement error levels are defined as measurement error ranges determined based on a maximum permissible error for measurement results of the measurement device, comprising:

- a high measurement error level, comprising all measurement errors exceeding the maximum permissible error,
- an intermediate measurement error level, comprising all measurement errors larger than a predetermined error limit, in particular a fixed percentage of the maximum permissible error or a difference between the maximum permissible error and an uncertainty pertinent to an operating procedure applied to determine the measurement error of the device during its calibration, and smaller than the maximum permissible error, and
- a low measurement error level, comprising all measurement errors which are smaller than the error limit.

It further comprises a third refinement of this method, wherein

- at least one complementary action is defined for at least one of the risk categories, and
- the respective complementary action is recommended and/or taken in case the corresponding risk category was determined for the device.

It further comprises an embodiment of the third refinement, wherein the complementary actions comprise:

- a statistical analysis of measurement results of the device,
- a periodic surveillance of the device during the calibration time interval, and/or
- assessment of an impact of the determined measurement error level on a process performed at the industrial site and/or a product produced at the industrial site.

The invention further comprises a method of operating a number of measurement device on the industrial site according to the method of the invention, wherein key performance indicators for the industrial site are determined, comprising:

- a percentage of the devices, which were found to exhibit one of the measurement error levels,
- a percentage of the devices for which the determined calibration time interval is larger than the reference interval, and/or
- a percentage of the devices for which the determined calibration time interval is smaller than the reference interval.

The invention and further advantages are explained in more detail using the figure of the drawing.

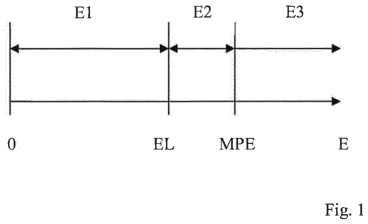

Fig. 1 shows: measurement error levels of a measurement device.

The invention provides a method of optimizing calibration time intervals between consecutive calibrations of a measurement device for measuring a quantity to be measured operated on a measurement site of an industrial site.

The measurement device can be any type of measurement device available on the market, like for example a level measurement device for measuring a level of a product in a container, a flow meter for measuring a flow of a product through a pipe, a temperature measurement device or a pressure measurement device. Corresponding to the measurement device, the measurement site can for example be a production hall, any type of container or vessel or a pipe. The industrial site is for example a laboratory, a production plant, a refinery or a steel furnace.

As described above, these measurement devices require calibration. During each calibration a measurement error E of the respective device is determined. The measurement error E can for example be determined on a calibration site, where the device performs a measurement task according to a given operating procedure, during which at least one given value of the quantity to be measured by the device is provided by a corresponding reference or standard and measured by the device. Based on the measurement result indicated by the device during this measurement task, the measurement error E can for example be calculated as a difference between the measurement result and the given value to be measured provided by the reference or standard. Obviously measurement errors E can be positive or negative, depending on whether the measurement result is larger or smaller than the given value to be measured. For simplicity reasons, throughout this text, the measurement errors E denominate the absolute value of the respective measurement error E.

In case two or more measurement tasks are performed, the measurement error E corresponds to the largest determined error.

According to the invention, a given number of discrete measurement error levels $E_i$ are defined for the measurement errors E of the device determined during its calibration.

The measurement error levels $E_i$ are preferably defined based on a predefined maximum permissible error MPE for the device, as shown in fig. 1. In consistency with the absolute values of the measurement errors E mentioned above, the maximum permissible error MPE denominate the absolute value thereof. Since calibration is frequently used to ensure, that the measurement device complies to a certain measurement accuracy specified for it, the maximum permissible error MPE is quite often determined based on the measurement accuracy specified for the device. Thus the device is considered compliant to the measurement accuracy specified for it, as long as its measurement error E does not exceed the maximum permissible error MPE. To this extend the measurement error levels $E_i$ can be solely based to the maximum permissible error MPE. Here a high measurement error level $E_3$ is defined, comprising all measurement errors E exceeding the maximum permissible MPE. In addition an intermediate measurement error level $E_2$ is foreseen, comprising all measurement errors E larger than an error limit EL given as a fixed percentage X%, e. g. 75%, of the maximum permissible MPE and smaller than the maximum permissible error MPE.

$$EL = X\% \, MPE < MPE$$

And finally a low measurement error level $E_1$ is foreseen, comprising all measurement errors smaller than the error limit EL.

As an alternative, the measurement error levels $E_i$ can be defined based on the maximum permissible error MPE and a measurement uncertainty U pertinent to the operating procedure applied to determine the measurement error E of the device during its calibration. In this case the error limit EL is given by the difference between the maximum permissible error MPE and the measurement uncertainty U:

$$EL = MPE - U$$

In addition to the measurement error levels $E_i$ a given number of criticality levels $C_j$ is defined for criticalities C of the device. Criticality assessment can be performed using any method known in industry. Criticality C can for example be determined based on a probability P of a of a defect of the device and a severity S of consequences of the defect.

The probability P of a defect of the device is preferably determined based on device specific properties as well as on measurement site specific properties. The device specific properties preferably include an expected life time of the device, its operating hours and/or its statistical failure rate. The measurement site specific properties of the device preferably include environment conditions prevailing at the measurement site, like for example an exposure of the measurement device to harsh conditions such as high or varying temperatures and/or pressures, aggressive and/or abrasive media and/or vibrations.

The severity S of the consequences of the defect of the device is preferably determined based on information pertinent to the industrial site and the measurement site embedded therein. This information is for example retrieved by a thorough analysis of the industrial (production) process performed on the industrial site in which preferably all potential consequences of the defect of the device are taken into account. The consequences of the defect include for example safety hazards the defect causes for people, for the environment and/or for the measurement site and the industrial site it is embedded in, consequences regarding the quality, quantity and the availability of end -, intermediate - or by - products produced by the industrial process, as well as consequences regarding the operating costs involved in running the industrial process.

In a next step a risk category $R_k$ for classifying a risk R involved in operating the device on the measurement site is assigned to each pair of one of the measurement error levels $E_i$ and one of the criticality levels $C_j$. The risk R involved in operating the measurement device is normally dominated by the measurement error E of the device and increases with increasing criticality C. In consequence the lowest risk category $R_1$ is for example assigned to devices with a low error level $E_1$ and a low or intermediate criticality level $C_1$ or $C_2$. The next higher risk category $R_2$ is for example assigned to devices with a low error level $E_1$ and a high criticality level $C_3$ and to devices with an intermediate error level $E_2$ and a low criticality level $C_1$, followed by the risk category $R_3$ assigned to devices with an intermediate error level $E_2$ and an intermediate criticality level $C_2$, the risk category $R_4$ assigned to devices with an intermediate error level $E_2$ and a high criticality level $C_3$, the risk category $R_5$ assigned to devices with a high error level $E_3$ and a low criticality level $C_1$, the risk category $R_6$ assigned to devices with a high error level $E_3$ and an intermediate criticality level $C_2$, and the highest risk category $R_7$ assigned to devices with a high error level $E_3$ and a high criticality level $C_3$.

After these preparatory steps have been performed, the measurement error E(D) of the device is determined by performing a calibration. Based on the determined measurement error E(D) the corresponding error level EL(D) of the device is determined. In addition, the criticality of the device C(D) pertinent to the device on the measurement site of the industrial site is determined. Based on the criticality of the device C(D) the corresponding criticality level CL(D) of the device is determined. Based on the error level EL(D) and the criticality level CL(D) of the device, the risk category RC(D) of the device is determined.

Following this, the device is put back into operation in all cases where the risk category RC(D) of the device is lower or equal to a predetermined maximal allowable risk category $R_{max}$, e.g. risk category $R_3$. Thus only devices found in risk categories $R_k$ lower or equal to the maximal allowable risk category $R_{max}$ will be reinstalled on their measurement site. In the given example, only devices found in risk category $R_1$, $R_2$ or $R_3$ are put back into operation.

According to the invention, theses devices will be re-calibrated after a calibration time interval T which is determined based on a product of a given reference interval $T_R$ and a risk factor $r_k$ assigned to the risk category RC(D) of the device.

The reference interval $T_R$ is for example a standard calibration time interval recommended by the manufacturer of the specific type of device. A typical example for the reference interval $T_R$ is an interval of 1 year.

The risk factors $r_k$ are predefined positive numbers larger than zero and smaller than a predetermined maximal value $r_{max}$ larger than one. Risk factors $r_k$ assigned to lower risk categories $R_k$ are larger than risk factors $r_k$ assigned to higher risk categories $R_k$. In the given example, this leads to the following relation:

$$0 < r_3 < r_2 < r_1 \le r_{max}$$

Since the maximal value $r_{max}$ determines the maximal length of the calibration time interval T as a multiple of the reference interval $T_R$ it is set such, that the maximal length of the calibration time interval T does not exceed a predetermined calibration time interval limit, e.g. a limit of 5 years. In the given example the maximal value $r_{max}$ is set to a value larger than 1 and preferably smaller or equal to 5. The risk factors $r_1$, $r_2$, $r_3$ assigned to the first, the second and the third risk category $R_1$, $R_2$, $R_3$ are for example: $r_1 = 1,5$, $r_2 = 1,0$ and $r_3 = 0,6$.

In consequence all devices found in risk category $RC(D) = R_1$ will be re-calibrated after a calibration time interval T, which is longer than the reference interval $T_R$, all device found in risk category $RC(D) = R_2$ will be re-calibrated after a calibration time interval T, which is equal to the reference interval $T_R$, and all device found in risk category $RC(D) = R_3$ will be re-calibrated after a calibration time interval T, which is shorter than the reference interval $T_R$. An overview is given in Table 1 below:

Table 1:

| $R_k$ | $E_j$ | $C_j$ | Adjustment required ? | Calibration time interval | |
|---|---|---|---|---|---|
| $R_1$ | $E_1$ | $C_1$ | No | $T = r_1 T_R$ | with $0 < r_3 < r_2 \leq 1 < r_1 \leq r_{max}$ |
| $R_1$ | $E_1$ | $C_2$ | No | $T = r_1 T_R$ | with $0 < r_3 < r_2 \leq 1 < r_1 \leq r_{max}$ |
| $R_2$ | $E_1$ | $C_3$ | No | $T = r_2 T_R$ | with $0 < r_3 < r_2 \leq 1 < r_1 \leq r_{max}$ |
| $R_2$ | $E_2$ | $C_1$ | No | $T = r_2 T_R$ | with $0 < r_3 < r_2 \leq 1 < r_1 \leq r_{max}$ |
| $R_3$ | $E_2$ | $C_2$ | No | $T = r_3 T_R$ | with $0 < r_3 < r_2 \leq 1 < r_1 \leq r_{max}$ |
| $R_4$ | $E_2$ | $C_3$ | Yes | $T_{DS} = c_3 T_R$ | with $0 < c_3 < c_2 < c_1 \leq 1$ |
| $R_5$ | $E_3$ | $C_1$ | Yes | $T_{DS} = c_1 T_R$ | with $0 < c_3 < c_2 < c_1 \leq 1$ |
| $R_6$ | $E_3$ | $C_2$ | Yes | $T_{DS} = c_2 T_R$ | with $0 < c_3 < c_2 < c_1 \leq 1$ |
| $R_7$ | $E_3$ | $C_3$ | Yes | $T_{DS} = c_3 T_R$ | with $0 < c_3 < c_2 < c_1 \leq 1$ |

Thus the calibration time interval T is determined for each device subjected to this method individually according to the risk R involved in operating the device, taking into account its measurement error level $EL(D)$ and its criticality level $CL(D)$. Where ever permitted by the risk R involved, calibration time intervals T longer than the reference interval $T_R$ are applied. On most industrial site this will be the case for the majority of devices operated on the site, leading to a large reduction of the time, effort and cost involved in their calibrations.

On the other hand shortening calibration time intervals T applied to all devices posing a larger but still acceptable risk, according to their risk category $RC(D)$ increases safety. Shortening the calibration time interval T in this way reduces the probability of these devices to become non-compliant during the calibration time interval, to an extend which is taking into account not only the measurement error level $EL(D)$ but also the criticality level $CL(D)$ of the device.

Devices found in risk categories $R_k$ higher than the maximal allowable risk category $R_{max}$ are adjusted and/or repaired, in order to improve their measurement properties. In the given example, all devices found in risk category R4, R5, R6 or R7 will be adjusted and/or repaired.

After their adjustment and/or repair, they will be subjected to an additional calibration, wherein their new measurement error $E_{Dn}$ and the corresponding new measurement error level $EL_n(D)$ is determined as described above. Then the new risk category $RC_n(D)$ of the repaired and/or adjusted device is determined based on the previously determined criticality level $CL(D)$ of the device and the new measurement error level $EL_n(D)$.

In case the new risk category $RC_n(D)$ is lower or equal to the maximal allowable risk category $R_{max}$ the device can be put back into operation. In this case however, it is re-calibrated after a shortened calibration time interval $T_{DS}$, determined as a product of the reference interval $T_R$ and a criticality factor $c_i$ assigned to the criticality level $CL(D)$ of the device. The criticality factors $c_i$ are positive numbers larger than zero and smaller or equal to one, and criticality factors $c_i$ assigned to lower criticality levels $C_j$ are larger than criticality factors $c_i$ assigned to higher criticality levels $C_j$. Following the example given above a large criticality factor $c_1$, e.g. of $c_1 = 1$, is assigned to the lowest criticality level $C_1$, an intermediate criticality factor $c_2$, e.g. of $c_2 = 0,6$, is assigned to the intermediate criticality level $C_2$, and a low criticality factor $c_3$, e.g. of $c_3 = 0,3$, is assigned to the highest criticality level $C_3$. The corresponding shortened calibration time intervals $T_{DS}$ are listed in table 1 above.

Preferably, each criticality factor $c_j$ is smaller or equal to the smallest risk factor $r_k$ assigned to any of the risk categories $R_k$ not exceeding the maximal allowable risk category $R_{max}$ comprising devices of the corresponding criticality level $C_j$. In the example given above, this means:

$$c_1 \leq r_2,$$

$$c_2 \leq r_3,$$

$$c_3 \leq r_2,$$

and

$$c_3 \leq c_2 \leq c_1$$

In case adjustment and/or repair did not lead to a sufficient reduction of the risk R involved on operating the device, the new risk category $RC_n(D)$ will still exceed the maximal allowable risk category $R_{max}$. In this case the device will be replaced.

The method according to the invention is preferably performed as an automated procedure executed for as many devices of the industrial site as possible. It is for example controlled by a central intelligent unit, e.g. a computer, on the calibration site, where all calibrations required by this method are performed. To this extend the unit is provided with the corresponding data obtained during the calibrations and the additional calibrations performed on the site and the criticality levels CL(D) of the devices, and initiates replacements, adjustments and/or repairs, additional calibrations, and/or re-calibrations after the determined calibration time intervals T or the shortened calibration time intervals $T_{DS}$ for each of the devices as required by the method according to the invention.

Under normal circumstance adjustment and/or repair of the device will drastically reduce the measurement error E of the device. Thus the new error level $EL_n(D)$ of the majority of the adjusted and/or repaired devices will be low. There is however a potential danger, that whatever caused the increased measurement error, that made the adjustment and/or repair necessary, may cause the measurement error E of the device to increase again. This potential danger is accounted for by the shortened calibration time interval $T_{DS}$ determined for this device based on its criticality level CL(D).

When adjustment and/or repair was unsuccessful, the new measurement error level will be high. Since the assignment of the risk categories $R_k$ is dominated by the measurement error level $E_i$, the resulting new risk category $EL_n(D)$ will again exceed the maximal allowable risk category $R_{max}$, and the device will be replaced.

It is only in the rare cases, when adjustment and/or repair were only partially successful, that an intermediate new measurement error level $EL_n(D)$ will occur. Depending on the criticality level CL(D) of the device, it is in this case possible that the new risk category $RC_n(D)$ will not exceed the maximal allowable risk category $R_{max}$, allowing for the device to be put back into operation and requiring its re-calibration after the shortened calibration time interval $T_{DS}$, corresponding to the original risk category RC(D) of the device.

In case an intermediate new measurement error level $EL_n(D)$ = E2 is determined a corresponding warning is preferably provided to an operator of the measurement site and/or the industrial site. Instead or in addition to this warning additional safety measures regarding the operation of the device on the measurement site are preferably taken. Additional safety measures could for example comprise a periodic on site verification of the measurement accuracy of the device during the shortened calibration time interval $T_{DS}$, or a more detailed surveillance of the measurement results of the device during its operation, including a statistical analysis thereof.

In addition, complementary actions are preferably defined for one or more risk categories $R_k$, which should be performed in case the corresponding risk category $R_k$ was determined for the device. To this extend the complementary actions can be issued as recommendations transmitted to the operator of the respective measurement site and/or the industrial site, e.g. as part of a calibration protocol or as an additional service rendered by the calibration site. The recommendations can be generated by an automated procedure performed by the intelligent unit on the calibration site. In this case the operator determines whether the recommended complementary action shall be performed. Alternatively, execution of the complementary actions applicable to the respective device can be implemented as a compulsory part of the overall procedure applied to run the industrial site.

The complementary action comprise for example

- a periodic surveillance of the device during the calibration time interval,
- a statistical analysis of measurement results of the device during its operation during the calibration time interval, and/or
- an assessment of an impact of the determined measurement error level EL(D) on a process performed at the industrial site and/or on a product produced at the industrial site.

Periodic surveillance of the device can for example be performed by executing regular verifications of the measurement results of the device or by regularly subjecting the device to a simplified calibration procedure. This action is preferably foreseen for all risk categories $R_i$ assigned to devices with an intermediate or high measurement error level $EL(D) = E_2$ or $EL(D) = E_3$ and an intermediate or high criticality level $CL(D) = C_2$ or $CL(D) = C_3$. In the example give above, it is thus preferably foreseen for the risk categories R3, R4, R6, R7. Statistical analysis of measurement results obtained from the device during the calibration time interval, are preferably performed using known statistical methods for analyzing measurement data, e.g. methods using control charts. Preferably methods capable of detecting a potential drift of the measurement results are applied.

Impact assessment is well known in the pharmaceutical industry and also foreseen according to standards ISO 900x of the International Organization for Standardization, when a non conformity of a device was detected.

Statistical analysis of the measurement results and impact assessment are preferably foreseen for devices for which the highest risk category, R7 in the example, was determined before they were adjusted and/or repaired prior to their re-installation on their measurement site.

Obviously more or alternative complementary actions can be defined for the respective risk categories $R_k$, for example corrective actions in the sense of to standards ISO 900x of the International Organization for Standardization.

The method according to the invention is preferably applied to all or at least a preferably large number of measurement devices operated on the industrial site. In this case key performance indicators representing the state of the industrial site can be determined.

Key performance indicator comprise for example

- a percentage of the devices, which were found to exhibit one of the measurement error levels,
- a percentage of the devices for which the determined calibration time interval is larger than the reference interval, and/or
- a percentage of the devices for which the determined calibration time interval is shorter than the reference interval.

The key performance indicator are for example generated by the intelligent unit at the calibration site at which these devices are calibrated, and provided to the operator of the industrial site. The key performance indicators give the operator a statistical overview on the overall performance of the devices on his industrial site, and facilitate his long term planning.

An increase in the percentage of devices found in the intermediate or high error level $E_2$, $E_3$, can for example be an indication of an aging device population, which at some point in the future will need to be replaced. The percentages of devices for which extended or shortened calibration time intervals T, $T_{DS}$ were determined forms valuable information with respect to resource management and cost analysis.

Key performance indicators are preferably monitored over the entire life time of the industrial site.

Although the method according to the invention has been described above with respect to measurement devices measuring a single quantity to be measured, it is not limited to this type of measurement devices. It can also be applied to measurement devices capable of measuring two or more quantities. This could for example be a pressure measurement device, comprising an integrated temperature sensor for measuring an ambient temperature. In that case, the method is performed for each of the quantities to be measured separately. Thus the measurement errors, the criticalities and the risk categories as well as the criticality factors and the risk factors are determined for each of the quantities to be measured separately, and adjustment and/or repair is performed as required. In case the device can be put back into operation, the execution of the method with respect to the different quantities the device is capable of measuring renders a calibration time interval or a shortened calibration time interval for each of the quantities according to the risk involved in operating the device with respect to the corresponding quantity. In consequence, the shortest of the determined calibration time intervals will be applied for the entire device.

**Claims**

1. Method of optimizing calibration time intervals between consecutive calibrations of a measurement device for measuring a quantity to be measured operated on a measurement site of an industrial site, comprising the steps of:

    - defining a given number of discrete measurement error levels ($E_i$) for measurement errors (E) of the device determined during its calibration,
    - defining a given number of discrete criticality levels ($C_j$), for criticalities (C) of the device determined based on a probability (P) of a defect of the device and a severity (S) of consequences of the defect,
    - assigning a risk category ($R_k$) classifying a risk (R) involved in operating the device on the measurement site to each pair of one of the measurement error levels ($E_i$) and one of the criticality levels ($C_j$),
    - determining the measurement error ($E_D$) of the device by performing a calibration of the device and determining the corresponding measurement error level (EL(D)) of the device,
- determining the criticality ($C_D$) of the device pertinent to the device on the measurement site of the industrial site and the corresponding criticality level (CL(D)) of the device,
- determining the risk category (RC(D)) of the device based on the measurement error level (EL(D)) and the criticality level (CL(D)) of the device, and
- in case the risk category (RC(D)) of the device is lower or equal to a maximal allowable risk category ($R_{max}$) performing a re-calibration of the device after a calibration time interval (T) given by a product of a given reference interval ($T_R$) and a predetermined risk factor ($r_k$) assigned to the risk category (RC(D)) of the device,

-- wherein the risk factors ($r_k$) are positive numbers larger than zero and smaller than a predetermined maximal value ($r_{max}$) larger than one, and
-- wherein risk factors ($r_k$) assigned to lower risk categories ($R_k$) are larger than risk factors ($r_k$) assigned to higher risk categories ($R_k$).

2. Method according to claim 1, wherein

- in case the risk category (RC(D)) exceeds the maximal allowable risk category ($R_{max}$) an adjustment and/or repair of the device is performed,
- after adjustment and/or repair of the device, a new measurement error level ($EL_n(D)$) of the device is determined in an additional calibration, and
- in case the new measurement error level ($EL_n(D)$) is low or intermediate,

-- the device is put back into operation on the measurement site and
-- re-calibrated after a shortened calibration time interval ($T_{DS}$), given by a product of the reference interval ($T_R$) and a criticality factor ($c_j$) assigned to the criticality level (CL(D)) of the device,
-- wherein the criticality factors ($c_j$) are positive numbers lager than zero and smaller or equal to one, and
-- wherein criticality factors ($c_j$) assigned to lower criticality levels ($C_j$) are larger than criticality factors ($c_j$) assigned to higher criticality levels ($C_j$), and

- in case the new measurement error level ($EL_n(D)$) is high, the device is replaced.

3. Method according to claim 2, wherein in case an intermediate new measurement error level ($EL_n(D)$) was determined in the additional calibration,

- a corresponding warning is provided to an operator of the measurement site and/or the industrial site, and/or
- additional safety measures regarding the operation of the device on the measurement site are taken.

4. Method according to claim 1, wherein the measurement error levels ($E_i$) are defined as measurement error ranges determined based on a maximum permissible error (MPE) for measurement results of the measurement device, comprising:

- a high measurement error level ($E_3$), comprising all measurement errors (E) exceeding the maximum permissible error (MPE),
- an intermediate measurement error level ($E_2$), comprising all measurement errors (E) larger than a predetermined error limit (EL), in particular a fixed percentage (X%) of the maximum permissible error (MPE) or a difference between the maximum permissible error (MPE) and an uncertainty (U) pertinent to an operating procedure applied to determine the measurement error (E) of the device during its calibration, and smaller than the maximum permissible error (MPE), and
- a low measurement error level ($E_1$), comprising all measurement errors (E) which are smaller than the error limit (EL).

5. Method according to claim 1, wherein

- at least one complementary action is defined for at least one of the risk categories ($R_k$), and
- the respective complementary action is recommended and/or taken in case the corresponding risk category ($R_k$) was determined for the device.

6. Method according to claim 5, wherein the complementary actions comprise:

- a statistical analysis of measurement results of the device,
- a periodic surveillance of the device during the calibration time interval (T, $T_{DS}$), and/or
- assessment of an impact of the determined measurement error level (EL(D)) on a process performed at the industrial site and/or a product produced at the industrial site.

**7.** Method of operating a number of measurement device on the industrial site according to the method of one of the previous claims, wherein key performance indicators for the industrial site are determined, comprising:

- a percentage of the devices, which were found to exhibit one of the measurement error levels ($E_i$),
- a percentage of the devices for which the determined calibration time interval (T) is larger than the reference interval ($T_R$), and/or
- a percentage of the devices for which the determined calibration time interval (T, $T_{DS}$) is smaller than the reference interval ($T_R$).

**Patentansprüche**

**1.** Verfahren der Optimierung von Kalibrierzeitintervallen zwischen aufeinanderfolgenden Kalibrierungen einer Messvorrichtung für die Messung einer zu messenden Menge, die an einer Messstelle eines Industriestandorts betrieben wird, umfassend die folgenden Schritte:

- Definition einer gegebenen Anzahl diskreter Messfehlerlevels ($E_i$) für Messfehler (E) der Vorrichtung, ermittelt während ihrer Kalibrierung,
- Definition einer gegebenen Anzahl diskreter Kritikalitätsstufen ($C_j$), für Kritikalitäten (C) der Vorrichtung, ermittelt basierend auf einer Wahrscheinlichkeit (P) eines Fehlers der Vorrichtung und einer Schwere (S) von Folgen des Fehlers,
- Zuweisung einer Risikokategorie ($R_k$) für die Klassifizierung eines Risikos (R) beim Betrieb der Vorrichtung an der Messstelle zu jedem Paar aus einem der Messfehlerlevels ($E_i$) und einer der Kritikalitätsstufen ($C_j$),
- Ermittlung des Messfehlers ($E_D$) der Vorrichtung durch Durchführung einer Kalibrierung der Vorrichtung und Ermittlung des entsprechenden Messfehlerlevels (EL(D)) der Vorrichtung,
- Ermittlung der für die Vorrichtung an der Messstelle des Industriestandorts relevanten Kritikalität ($C_D$) und der entsprechenden Kritikalitätsstufe (CL(D)) der Vorrichtung,
- Ermittlung der Risikokategorie (RC(D)) der Vorrichtung basierend auf dem Messfehlerlevel (EL(D)) und der Kritikalitätsstufe (CL(D)) der Vorrichtung, und
- im Fall, dass die Risikokategorie (RC(D)) der Vorrichtung geringer oder gleich einer maximal zulässigen Risikokategorie ($R_{max}$) ist, Durchführung einer Re-Kalibrierung der Vorrichtung nach einem Kalibrierzeitintervall (T), das sich durch ein Produkt aus einem gegebenen Referenzintervall ($T_R$) und einem vorgegebenen, der Risikokategorie (RC(D)) der Vorrichtung zugewiesenen Risikofaktor ($r_k$) ergibt,

-- wobei die Risikofaktoren ($r_k$) positive Zahlen größer Null und kleiner als ein vorgegebener Maximalwert ($r_{max}$) größer als eins sind, und
-- wobei die geringeren Risikokategorien ($R_k$) zugewiesenen Risikofaktoren ($r_k$) größer als höheren Risikokategorien ($R_k$) zugewiesene Risikofaktoren ($r_k$) sind.

**2.** Verfahren nach Anspruch 1, wobei

- im Fall, dass die Risikokategorie (RC(D)) die maximal zulässige Risikokategorie ($R_{max}$) übersteigt, eine Anpassung und/oder Reparatur der Vorrichtung vorgenommen wird,
- nach Anpassung und/oder Reparatur der Vorrichtung ein neuer Messfehlerlevel ($EL_n(D)$) der Vorrichtung in einer zusätzlichen Kalibrierung ermittelt wird, und
- im Fall, dass der neue Messfehlerlevel ($EL_n(D)$) niedrig oder mittel ist,

-- die Vorrichtung an der Messstelle wieder in Betrieb genommen und
-- nach einem kurzen Kalibrierzeitintervall ($T_{DS}$), das sich aus einem Produkt aus dem Referenzintervall ($T_R$) und einem der Kritikalitätsstufe (CL(D)) der Vorrichtung zugewiesenen Kritikalitätsfaktor ($c_j$) ergibt, wieder kalibriert wird,
-- wobei die Kritikalitätsfaktoren ($c_j$) positive Zahlen größer Null und kleiner oder gleich Eins sind, und
-- wobei die geringeren Kritikalitätsstufen ($C_i$) zugeordneten Kritikalitätsfaktoren ($c_j$) größer als höheren

Kritikalitätsstufen ($C_j$) zugewiesene Kritikalitätsfaktoren ($c_j$) sind, und

- im Fall, dass der neue Messfehlerlevel ($EL_n(D)$) hoch ist, die Vorrichtung ausgetauscht wird.

**3.** Verfahren nach Anspruch 2, wobei im Fall, dass ein mittlerer neuer Messfehlerlevel ($EL_n(D)$) in der zusätzlichen Kalibrierung ermittelt wurde,

- eine entsprechende Warnung an den Betreiber der Messstelle und/oder des Industriestandorts ausgegeben wird, und/oder
- zusätzliche Sicherheitsmaßnahmen in Bezug auf den Betrieb der Vorrichtung an der Messstelle getroffen werden.

**4.** Verfahren nach Anspruch 1, wobei die Messfehlerlevel ($E_i$) als Messfehlerbereiche definiert sind, die auf Basis eines maximal zulässigen Fehlers (MPE) für Messergebnisse der Messvorrichtung ermittelt werden, umfassend:

- einen hohen Messfehlerlevel ($E_3$), umfassend alle Messfehler (E), die den maximal zulässigen Fehler (MPE) übersteigen,
- einen mittleren Messfehlerlevel ($E_2$), umfassend alle Messfehler (E), die größer als ein vorgegebener Fehlergrenzwert (EL), insbesondere eines festgelegten Prozentsatzes (X%) des maximal zulässigen Fehlers (MPE) oder einer Differenz zwischen dem maximal zulässigen Fehler (MPE) und einer Unsicherheit (U) aufgrund eines angewendeten Betriebsverfahrens zur Ermittlung des Messfehlers (E) der Vorrichtung während ihrer Kalibrierung, und kleiner als der maximal zulässige Fehler (MPE) sind, und
- einen niedrigen Messfehlerlevel ($E_1$), umfassend alle Messfehler (E), die kleiner als der Fehlergrenzwert (EL) sind.

**5.** Verfahren nach Anspruch 1, wobei

- mindestens eine ergänzende Aktion für mindestens eine der Risikokategorien ($R_k$) definiert ist, und
- die jeweilige ergänzende Aktion empfohlen und/oder unternommen wird im Fall, dass die entsprechende Risikokategorie ($R_k$) für die Vorrichtung ermittelt wurde.

**6.** Verfahren nach Anspruch 5, wobei die ergänzenden Aktionen Folgendes umfassen:

- eine statistische Analyse der Messergebnisse der Vorrichtung,
- eine periodische Überwachung der Vorrichtung während des Kalibrierzeitintervalls (T, $T_{DS}$), und/oder
- Beurteilung einer Auswirkung des ermittelten Messfehlerlevels (EL(D)) auf einen am Industriestandort durchgeführten Prozess und/oder ein am Industriestandort produziertes Produkt.

**7.** Verfahren des Betriebs einer Anzahl Messvorrichtungen am Industriestandort nach dem Verfahren aus einem der vorherigen Ansprüche, wobei Leistungskennzahlen für den Industriestandort ermittelt werden, umfassend:

- einen Prozentsatz der Vorrichtungen, die einen der Messfehlerlevel ($E_i$) aufwiesen,
- einen Prozentsatz der Vorrichtungen, bei denen das ermittelte Kalibrierzeitintervall (T) größer als das Referenzintervall ($T_R$) ist, und/oder
- einen Prozentsatz der Vorrichtungen, bei denen das ermittelte Kalibrierzeitintervall (T, $T_{DS}$) kleiner als das Referenzintervall ($T_R$) ist.

**Revendications**

**1.** Méthode d'optimisation des intervalles de temps d'étalonnage entre des étalonnages consécutifs d'un appareil destiné à la mesure d'une quantité à mesurer, exploité sur un site de mesure d'un site industriel, comprenant les étapes suivantes :

- définition d'un nombre donné de niveaux d'erreur de mesure discrets ($E_i$) pour les erreurs de mesure (E) de l'appareil déterminées pendant son étalonnage,
- définition d'un nombre donné de niveaux de criticité discrets ($C_j$) pour les criticités (C) de l'appareil déterminées sur la base d'une probabilité (P) d'un défaut de l'appareil et d'une sévérité (S) des conséquences du défaut,

- assignation d'une catégorie de risque ($R_k$) classifiant un risque (R) lié à l'utilisation de l'appareil sur le site de mesure à chaque paire composée d'un des niveaux d'erreur de mesure ($E_i$) et d'un des niveaux de criticités ($C_j$),
- détermination de l'erreur de mesure ($E_D$) de l'appareil en réalisant un étalonnage de l'appareil et détermination du niveau d'erreur de mesure (EL(D)) correspondant de l'appareil,
- détermination de la criticité ($C_D$) de l'appareil pertinente pour l'appareil sur le site de mesure du site industriel et le niveau de criticité (CL(D)) correspondant de l'appareil,
- détermination de la catégorie de risque (RC(D)) de l'appareil basée sur le niveau d'erreur de mesure (EL(D)) et le niveau de criticité (CL(D)) de l'appareil, et
- dans le cas où la catégorie de risque (RC(D)) de l'appareil est inférieure ou égale à une catégorie de risque maximale admissible ($R_{max}$), exécution d'un réétalonnage de l'appareil après un intervalle de temps d'étalonnage (T) donné par un produit ou un intervalle de référence ($T_R$) donné et un facteur de risque ($r_K$) assigné à la catégorie de risque (RC(D)) de l'appareil,

    -- les facteurs de risque ($r_K$) étant des nombres positifs supérieurs à zéro et inférieurs à une valeur maximale ($r_{max}$) prédéterminée, supérieure à un, et
    -- les facteurs de risque ($r_K$) assignés aux catégories de risque ($R_K$) inférieures étant supérieurs aux facteurs de risque ($r_K$) assignés aux catégories de risque ($R_K$) supérieures.

2. Méthode selon la revendication 1, pour laquelle

    - dans le cas où la catégorie de risque (RC(D)) excède la catégorie de risque maximale admissible ($R_{max}$), un ajustement et/ou une réparation de l'appareil est effectué,
    - après l'ajustement et/ou la réparation de l'appareil, un nouveau niveau d'erreur de mesure ($EL_n(D)$) de l'appareil est déterminé dans le cadre d'un étalonnage supplémentaire, et
    - dans le cas où le nouveau niveau d'erreur de mesure ($EL_n(D)$) est faible ou moyen,

        -- l'appareil est remis en fonctionnement sur le site de mesure et
        -- réétalonné après un intervalle de temps d'étalonnage ($T_{DS}$) raccourci, donné par un produit de l'intervalle de référence ($T_R$) et un facteur de criticité ($c_j$) assigné au niveau de criticité (CL(D)) de l'appareil,
        -- les facteurs de criticité ($c_j$) étant des nombres positifs supérieurs à zéro et inférieurs ou égaux à un, et
        -- les facteurs de criticité ($c_j$) assignés aux niveaux de criticité inférieurs ($C_j$) étant supérieurs aux facteurs de criticité ($c_j$) assignés aux niveaux de criticité supérieurs ($C_j$), et

    - dans le cas où le nouveau niveau d'erreur de mesure ($EL_n(D)$) est élevé, l'appareil est remplacé.

3. Méthode selon la revendication 2, pour laquelle un nouveau niveau d'erreur de mesure intermédiaire ($EL_n(D)$) a été déterminé dans le cadre de l'étalonnage supplémentaire,

    - un avertissement correspondant est envoyé à l'opérateur du site de mesure et/ou du site industriel, et/ou
    - des mesures de sécurité supplémentaires concernant le fonctionnement de l'appareil sur le site de mesure sont prises.

4. Méthode selon la revendication 1, pour laquelle les niveaux d'erreurs de mesure ($E_i$) sont définis comme gammes d'erreur de mesure déterminées sur la base d'une erreur maximale tolérée (MPE) pour les résultats de mesure de l'appareil de mesure, comprenant

    - un niveau d'erreur de mesure haut ($E_3$), comprenant toutes les erreurs de mesure (E) excédant l'erreur maximale tolérée (MPE),
    - un niveau d'erreur de mesure intermédiaire ($E_2$), comprenant toutes les erreurs de mesure (E) supérieures à une limite d'erreur (EL) prédéterminée, notamment un pourcentage (X%) fixe de l'erreur maximale tolérée (MPE) ou une différence entre l'erreur maximale tolérée (MPE) et une incertitude (U) pertinente pour une procédure de fonctionnement appliquée afin de déterminer l'erreur de mesure (E) de l'appareil durant son étalonnage, et inférieure à l'erreur maximale tolérée (MPE), et
    - un niveau d'erreur de mesure bas ($E_1$), comprenant toutes les erreurs de mesure (E) qui sont inférieures à la limite d'erreur (EL).

5. Méthode selon la revendication 1, pour laquelle

- au moins une action complémentaire est définie pour au moins l'une des catégories de risque ($R_k$), et
- l'action complémentaire respective est recommandée et/ou prise dans le cas où la catégorie de risque ($R_k$) correspondante a été déterminée pour l'appareil.

6. Méthode selon la revendication 5, pour laquelle les actions complémentaires comprennent :

   - une analyse statistique des résultats de mesure de l'appareil,
   - une surveillance périodique de l'appareil durant l'intervalle de temps d'étalonnage ($T$, $T_{DS}$), et/ou
   - une évaluation d'un impact du niveau d'erreur de mesure déterminé ($EL(D)$) sur un process exécuté sur le site industriel et/ou un produit fabriqué sur le site industriel.

7. Méthode d'exploitation d'un certain nombre d'appareils de mesure sur le site industriel conformément à la méthode d'une des revendications précédentes, pour laquelle des indicateurs clés de performance sont déterminés, comprenant :

   - un pourcentage des appareils, qui ont été trouvés présentant l'un des niveaux d'erreur de mesure ($Ei$),
   - un pourcentage des appareils, pour lesquels l'intervalle de temps d'étalonnage ($T$) est supérieur à l'intervalle de référence ($T_R$), et/ou
   - un pourcentage des appareils, pour lesquels l'intervalle de temps d'étalonnage ($T$, $T_{DS}$) est inférieur à l'intervalle de référence ($T_R$).

E1　　　　　E2　　E3

0　　　　　EL　　MPE　　E

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KATE MC CORMICK.** Quality. Butterworth Heinemann, 23 July 2002